# EUROPEAN PATENT APPLICATION

(11) **EP 4 749 524 A1**
(43) Date of publication of application: **27.05.2026**
(21) Application number: 25218166.4
(22) Date of filing: 24.11.2025
(51) Int. Cl.: G06N 3/045, G06N 5/022, G06Q 10/20

(54) **MULTI-AGENT LLM SYSTEM, AND METHOD FOR USING A MULTI-ANGENT LLM SYSTEM, FOR MAINTENANCE OF A POWERED SYSTEM**

(30) Priority: 26.11.2024 US 202418961104
(71) Applicant: The Boeing Company, Arlington, VA 22202 (US)
(72) Inventor: XIONG, Ying, ARLINGTON, 22202 (US); PARSA, Soheil Seyyedi, ARLINGTON, 22202 (US); BELLEMARE-DAVIS, Alexander, ARLINGTON, 22202 (US); HUANG, Yiping, ARLINGTON, 22202 (US); WANG, Deyi, ARLINGTON, 22202 (US); LIU, Yadong, ARLINGTON, 22202 (US); LANGILLE, Anni Sarah, ARLINGTON, 22202 (US)
(74) Representative: Plasseraud IP

(57) **Abstract**

A multi-agent LLM system includes multiple non-generative executive LLM agents trained on different sets of maintenance information, and a generative orchestration LLM agent coupled with the executive LLM agents. The orchestration LLM agent can receive a maintenance inquiry related to the powered system from personnel, and assign one or more of the executive LLM agents to examine the maintenance inquiry based on which of the different sets of the technical information that the executive LLM agents were trained. The executive LLM agents can examine the set of the technical information used to train the respective one or more of the executive LLM agents for relevant information to be output responsive to the maintenance inquiry and to provide the relevant information to the orchestration LLM agent. The orchestration LLM can present the relevant information from the executive LLM agents to the personnel for maintenance of the powered system.

## Description

### BACKGROUND

### FIELD OF THE DISCLOSURE

Examples of the present disclosure generally relate to systems and methods to repair, inspection, and/or maintenance of various equipment based on the use artificial intelligence (AI) to retrieve technical and/or maintenance information.

### DESCRIPTION OF THE ART

Repairing, inspecting, and/or maintaining equipment may require referring to a variety of sources of information, such as general information regarding the type (e.g., make and/or model) of the equipment and individualized information regarding the exact equipment being repaired, inspected, and/or maintained. The general information can include different technical publications, images, and/or videos describing procedures and/or providing visual information for the personnel performing the repair, inspection, and/or maintenance. The individualized information can include historical information such as maintenance logs, personnel notes related to the equipment, usage logs, etc.

Various search tools exist for allowing these personnel to search through these sources of information to obtain the information needed to complete the repair, inspection, and/or maintenance of the equipment. These include text and/or vocal searches of different databases, as well as usage of conversational generative AI-based systems, such as retrieval augmented generation (RAG) frameworks that rely on large language models (LLMs). These conversational generative AI-based systems can allow for personnel to submit inquiries in a more conversational manner (as opposed to text search or menu navigation), with the systems searching many information sources and creating conversational responses based on inquiries. These conversational responses may not be in any particular format or style.

The currently known solutions using these types of conversational frameworks can lack features such as effective integration of domain knowledge (specific to the equipment) and mitigation of hallucinatory responses. A hallucinatory response can include providing information to an inquiry that is either incorrect or fabricated (and not truthfully responsive to the inquiry). These solutions can suffer from a lack of domain knowledge, which can make it challenging to reason against complex tasks and understand system-specific maintenance acronyms and illustrations using maintenance-chain-of-thoughts.

Additionally, current embodiments of conversational AI and their generative LLM engines struggle to secure sensitive training information. That is, in order to competently understand a domain question and to competently retrieve and/or generate a response as noted above, many solutions undertake the fine-tuning (additional training) of the underlying LLM on a relevant training set, which may improve its performance but which may also include sensitive content. For example, an LLM expected to answer questions concerning the maintenance history of a classified component may need to be trained on documents describing sensitive details on the classified component. However, it can be very difficult to comprehensively condition the resulting conversational AI to avoid divulging those details when prompted, and increasingly creative and sophisticated "jailbreaking" techniques to prompt such generative LLMs into revealing their secrets emerge every month.

Additionally, hallucinatory responses can pose a significant problem in both maintenance services and reliability engineering. As generative models struggle with this issue, it becomes more important to control and reduce hallucinations whenever possible. Although some hallucinations may be trivial to verify and dismiss or correct (e.g., "there are five engines on the airplane"), other claims may be prohibitively expensive to validate (e.g, "there have been 1076 instances of this failure mode in the last 5 years"). The difficulty in measuring and correcting hallucination thus brings the trustworthiness of all responses into question. Addressing these limitations can be important for the development of more robust and reliable conversational frameworks in certain domains, such as the aviation domain.

Currently, personnel such as mechanics face challenges with inefficient and inaccurate technical publication searches, which can be a large and important part of their daily routine. Specifically, when given a task related to some equipment, mechanics can require access to maintenance histories of the equipment to aid in decision-making and can refer to technical publication to ensure they have the necessary consumable materials and tools. But some currently known AI-based systems can have access to a large amount of unrelated or irrelevant information, and may not have access to historical information regarding equipment. As a result, the risk of these systems providing incorrect and/or irrelevant hallucinatory responses, as well as responses that are not based on the actual history of the equipment, is significant. When dealing with equipment that has significant safety concerns, such as aircraft, these risks can be unacceptable.

### BRIEF SUMMARY

This disclosure relates to systems as per the appended claims, and to methods as per the appended claims.

### BRIEF DESCRIPTION OF THE DRAWINGS

Figure 1 illustrates one example of a multi-agent LLM system.
Figure 2 illustrates one example of an LLM.
Figure 3 illustrates a flowchart of one example of a method for using a multi-agent AI system for technical publication and maintenance history retrieval.
Figure 4 includes a graphical user interface (GUI) that may be presented on an electronic display device of an interface shown in Figure 1.

### DETAILED DESCRIPTION

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Examples of the inventive subject matter described herein provide multi-agent, conversational AI systems for querying and retrieving technical publications and historical information relevant to equipment being repaired, inspected, and/or maintained. The system uses a conversational framework for LLMs that can receive spoken or verbal natural language queries as input to a generative orchestration LLM, which can identify which of several discriminative, or non-generative, executive LLMs (e.g., LLM agents) may have access to information relevant to responding to the queries, and direct the queries (or portions of the queries) to the different executive LLM agents having access to the relevant information. The orchestration LLM can be a generative LLM in that the LLM can create new data or information from a provided prompt. In one example, the orchestration LLM uses a retrieval augmented generation (RAG) framework. The executive LLMs can be discriminative (also herein referred to as non-generative) LLMs in that these LLMs discriminate, classify, cluster similar or dissimilar data, etc. that is provided to the LLMs without creating any new data or information in response to a provided prompt).

The executive LLM agents may each be associated with different sets or corpora of information that is searched by the respective executive LLM agent for providing responses (or partial responses) to the queries. The executive LLM agent can use a maintenance-chain-of-thoughts-based knowledge graph model for efficiently assigning tasks to different ones of the executive LLM agents.

For example, in response to an inquiry asking which component of an aircraft engine may be causing unacceptable output from a sensor, one executive LLM agent may search repair manuals for the engine, another executive LLM agent may search a service manual for a first component of the engine, another executive LLM agent may search another repair manual for a second component of the engine, another executive LLM agent may search maintenance logs containing historical information regarding the maintenance of that engine, another executive LLM agent may search maintenance logs containing images regarding the maintenance of a third component of the engine, and so on. Other executive LLM agents may not search any corpus of information as these executive LLMs agents may not be associated with information relevant to the engine or the components of the engine.

The executive LLM agents may use a domain-specific-language-model (DLM) (such as ADLMs) and maintenance-task-based function tools to minimize or reduce hallucinatory responses. The ADLMs may be LLMs that are generative or non-generative (i.e., discriminative) LLMs fine-tuned or pre-trained on aviation domain-specific training corpora. The executive LLM agents may use various tiers, levels, or areas of classifiers, such as component, condition, and action classifiers, which are trained (and re-trained) on maintenance logbook data for historical insight into the equipment being maintained, inspected, or repaired. These classifiers can be used as a set of enhanced labels for the maintenance text to boost efficient retrieval of maintenance records and can be utilized for generating insightful summaries.

Each of the executive LLM agents that searches for information relevant to the engine or its components can provide responsive information to the generative orchestration LLM agent. This orchestration LLM agent can then prepare a response to the personnel that provided the query. This response can include the information provided by the non-generative LLM agents.

The inventive subject-matter described herein improve the maintenance of powered systems. Indeed, the executive LLM agents are trained to provide non-generative, deterministic technical information that is directly related to the particular maintenance inquiry that is received. Therefore, upon the presentation of this information, the maintenance personal can use directly this information for performing the maintenance. Additionally, the inventive subject matter described herein can improve or optimize the experience of technical publication searching, technical record searching and root cause diagnosis for personnel such as aircraft pilots and aircraft mechanics and reliability analysts, by focusing on both technical publications and historical maintenance information. This can increase the efficiency by which mechanics receive relevant responses to maintenance inquiries (e.g., by reducing the number of inquiries needed to obtain the relevant information and/or by reducing the amount of less relevant information provided to the mechanics). The inventive systems and methods described herein can provide a one-stop solution that combines information from relevant technical publications and maintenance history records in response to conversational and in some examples verbal inquiries. Mechanics can access and analyze maintenance histories of a specific systems and/or equipment of the systems (e.g., using a registered aircraft tail number). The inventive systems and methods can obtain a summary of the health status of the equipment and review previous actions taken to diagnose similar issues. Additionally, the inventive systems and methods can quickly locate relevant fault isolation manuals (FIMs), refer to the corresponding maintenance manual actions for isolation procedures, and access illustrations from the parts catalogs, such as aircraft illustrated parts catalogs (AIPCs). The inventive systems and methods can reduce the time spent on maintenance investigations and research, and improve overall efficiency. For example, if the inventive systems and methods reduce the amount of time needed to complete a maintenance task, then this can reduce the labor costs associated with maintenance of equipment, as well as errors committed during maintenance.

Moreover, they can provide this functionality without risk of exposure of sensitive LLM-training information (because discriminative/non-generative agents are incapable of divulging their training data in the manner of generative AI). They can also do so without risk of hallucination, because only generative AI can hallucinate. They can also provide this functionality with measurable and quantifiable performance (e.g., veracity, accuracy, precision, etc), providing easily quantifiable trust that is otherwise elusive to generative AI. In this context, generative AI provides the intuitive and conversational interfance and the orchestrative service, but leaves the functional services to robust internal, non-generative agents.

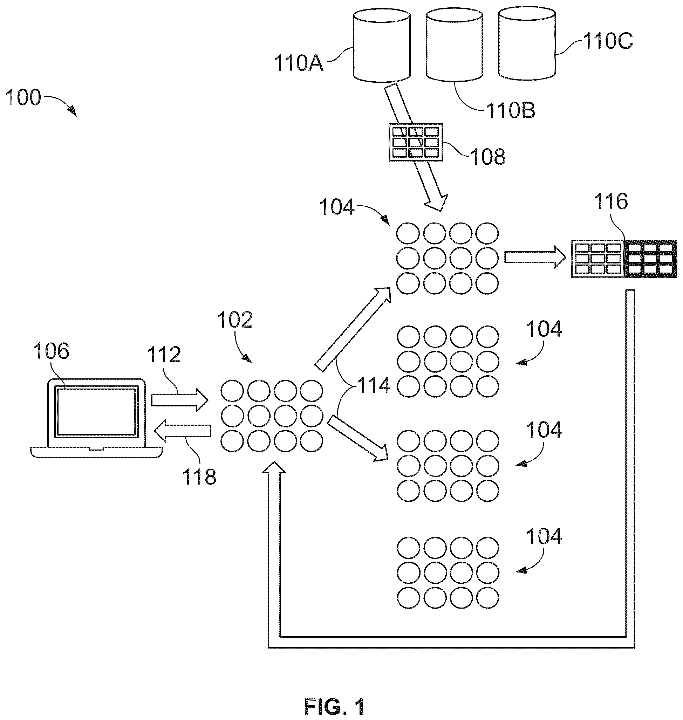

Figure 1 illustrates one example of a multi-agent LLM system 100. The multi-agent LLM system 100 can include an orchestration LLM agent 102 and several executive LLM agents 104. While four executive LLM agents 104 are shown, in some examples, there may be fewer agents 104 or more than four agents 104. Each of the LLM agents 102, 104 can represent a trained artificial neural network (ANN) that performs different tasks. For example, the orchestration LLM agent 102 can be a generative LLM that receives queries via an interface 106 as input (either spoken, provided as textual and/or numerical input, images, videos, etc.) identify which of the executive LLM agents 104 to use to respond to the queries using a maintenance-chain-of-thoughts-based knowledge graph model, receive information from these executive LLM agents 104 that responds to the queries, and present the responsive information to personnel via the interface 106 (or another interface 106). This interface 106 can be a man-machine interface, and include one or more input and/or output devices, such as a computer, a phone, a microphone, a keyboard, a touchscreen, etc. The information can thus be presented, for example rendered, through the interface 106, for example to the personnel for maintenance of the powered system. The presenting/rendering of the information can be performed using any of the output devices of the interface 106. For example, the information can be displayed on a display screen, read through loudspeakers, etc.

The executive LLM agents 104 can represent non-generative LLMs that are trained on domain-specific classifiers to search through different computer readable, non-transitory memories or databases 110A-C having information relative to the domain of the queries (e.g., maintenance of particular equipment or systems, such as aircraft and associated equipment). These executive LLM agents 104 can respond to the orchestration LLM agent 102 with the responsive information found by the different executive LLM agents 104.

The use of ANNs trained in the relevant domain of equipment maintenance can reduce or eliminate hallucinations of the LLM system 100, as well as improve the efficiency by which personnel can obtain information needed for equipment maintenance. The LLMs 104, 106 can be machine learning models used to perform a wide variety of complex tasks, including image recognition, speech recognition, pattern recognition, and collection of information responsive to inquiries. Each of the LLMs 104, 106 can be provided through software, hardware, or a combination of software and hardware.

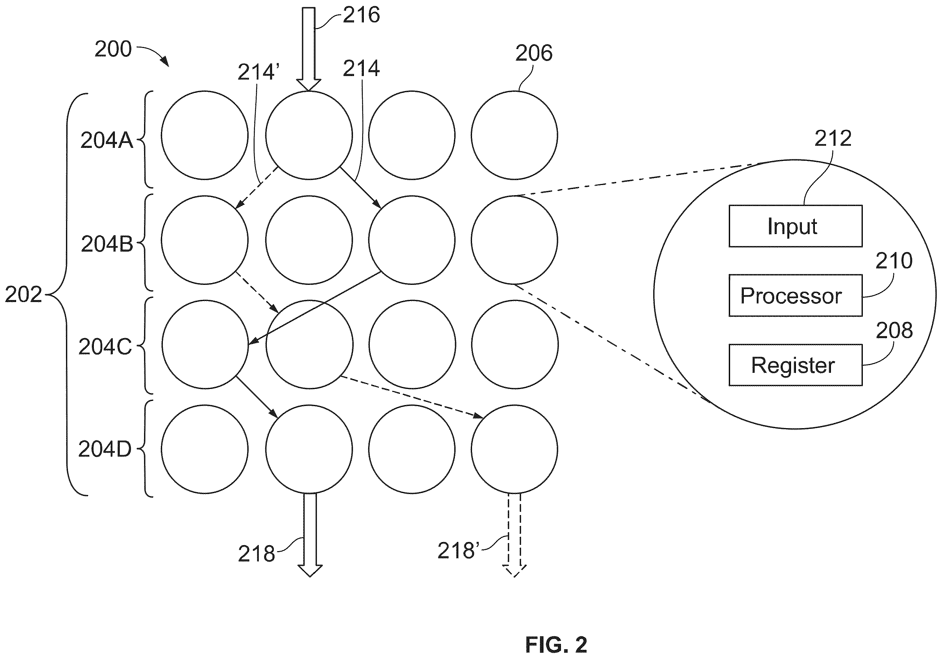

With continued reference to the LLM system 100 shown in Figure 1, Figure 2 illustrates one example of an LLM 200. The LLM 200 can represent each of the LLMs 104, 106. The LLM 200 includes a series 202 of layers 204A-D, each comprising one or more artificial neurons 206 arranged in one or more neuron arrays or arrangements. While four neurons 206 are shown in each layer 204A-D and four layers 204A-D are shown, alternatively, a different number of neurons 206 may be in one or more of the layers 204A-D and/or there may be a different number of layers 204A-D.

The LLM 200 may include the neurons 206 arranged in an input layer 204A, an output layer 204D, and two or more fully connected hidden or intermediate layers 204B, 204C between the input and output layers 204A, 205D. Each neuron 206 can include or represent a register 208, a microprocessor 210, and at least one input 212. The neurons 206 generate outputs based on one or more activation functions. The neurons 206 receive input from another neuron 206 (e.g., the output from one neuron 206 is the input for another neuron 206). This input also can include a set of weights. The neurons 206 can be connected with each other via synaptic circuits 214, 214'. The synaptic circuits 214, 214'can include or represent memories for storing synaptic weights.

One or more neurons 206 in the input layer 204A of the LLM 200 can receive an input 216 into the LLM 200. These neurons 206 can receive this input via the input(s) 212 of those neurons 206 in the input layer 204A. The neurons 206 receive the input, apply one or more mathematical equations or relationships stored in the registers 208 (and that include the weights) to generate an output. The processors 210 of the neurons 206 apply the equations/relationships. The processors 210 of the neurons 206 pass that output to another neuron 206 in the same layer 204A or in a different layer 204B, 204C. The output from one neuron 206 is passed along a synaptic circuit 214 to another neuron 206 and is used as input to this other neuron 206. This process continues until one or more neurons 206 in the output layer 204D generate an output 218 from the LLM 200.

During training of the LLM 200 (e.g., the ANN), labeled or unlabeled data may be provided as input 216 to the LLM 200. The neurons 206 process the input data to generate the output of the LLM 200. Feedback can be provided to the LLM 200 in the form of a calculated error or other indication of the accuracy of the output from the LLM 200. Based on this error, the neurons 206 can change one or more of the synaptic circuits 214 that connect the neurons 206 and/or the weights applied by one or more of the neurons 206. For example, some synaptic circuits 214 can be changed to modified synaptic circuits 214' such that the same input 216 would result in different neurons 206 receiving input and passing output to other neurons and generating a different output 218' from the LLM 200.

During a subsequent iteration of operation of the LLM 200, additional labeled or unlabeled data can be provided to the neurons 206 as the input 216 into the input layer 204A, and the neurons 206 can process the input data again to generate an output 218' from the LLM 200. The output 218' is again examined for error and can be provided back to the LLM 200 to continue modifying and refining (e.g., training or re-training) the relationships between the neurons 206 (e.g., the synaptic circuits 214) and/or the weights applied by the neurons 206 to decrease the error of outputs from the LLM 200. For example, the LLM 200 may be trained and re-trained using backpropagation, which can involve adjusting model parameters (e.g., synaptic circuits 214 and/or weights) using calculated derivatives to minimize the loss function (e.g., the error). The backpropagation can be a mathematical calculation for supervised learning of the LLM 200 using gradient descent. Backpropagation can be used to calculate the gradient of the error function with respect to the weights of the LLM 200.

Returning to the description of the LLM system 100, the orchestration LLM agent 102 is coupled with the interface 106 and the executive LLM agents 104 (e.g., via wired and/or wireless communication pathways). The orchestration LLM agent 102 is a generative LLM and the executive LLM agents 104 are non-generative LLMs in one example. Each of the executive LLM agents 104 can be trained on a different set 108 of technical information. For example, different non-transitory computer readable media (e.g., computer memories 110A-C) can store different types or categories of technical information. This technical information can be maintenance information, such as instructions on how to repair, inspect, or maintain equipment or components of equipment; images and/or videos demonstrating the repair, inspection, and/or maintenance of equipment or components; parts catalogs for components of the equipment; currently updated inventories of components of the equipment (as well as locations of the inventories); technical manuals; service or maintenance manuals; maintenance histories (e.g., maintenance logs); fault isolation manuals; or the like. Each of the executive LLM agents 104 can be trained on a different set, category, or type of information. For example, one LLM agent 104 can be trained on maintenance logs or logbooks (of all equipment or a particular make and/or model of equipment), another LLM agent 104 can be trained on parts catalogs (of all equipment components or a particular make and/or model of equipment components), and so on. This can provide a modularity feature to the LLM system 100.

For example, the LLM agents 104 may be modular in that, while the LLM system 100 continues to operate, a new LLM agent 104 trained on a new set of data (e.g., service manuals for new equipment and/or components) can be added to the LLM system 100, an LLM agent 104 can be removed from the system 100 (e.g., if a particular component or equipment is no longer used), and/or one of the LLM agents 104 may be swapped out for a new LLM agent 104. The LLM system 100 can continue to operate as LLM agents 104 are added and/or removed. Because each LLM agent 104 may be trained on a different set or corpus of information, the LLM system 100 can continue to operate even when LLM agents 104 are removed and/or added to the system 100 as removal of an LLM agent 104 allows the other LLM agents 104 to continue operating.

The orchestration LLM agent 102 receives a maintenance inquiry 112 related to the powered system from personnel. This maintenance inquiry 112 can be spoken to the interface 106 (and transcribed into alphanumeric information), typed into the interface 106, or the like. In one implementation, the interface 106 may be located in a shop or maintenance facility and the personnel using the interface 106 may verbally speak the inquiry 112 in a conversational manner. For example, the personnel may ask the interface 106 "do I need to inspect the bearings of the backup generator for aircraft tail number 123456?" The inquiry 112 need not be in any particular format, thus allowing personnel with a wide variety of experience and expertise to use the LLM system 100.

The orchestration LLM agent 102 can use a maintenance-chain-of-thoughts based knowledge graph model to determine which of the executive LLM agents 104 should be used or assigned to respond to the inquiry 112. Such a model can include one or more graphs having connected nodes, with different nodes representing different concepts, such as different types of components, different types of conditions (e.g., failed, healthy, worn out, activated, deactivated, vibrating, etc.) of the components, and/or different types of actions to be performed (e.g., repair, replace, inspect, and/or maintain a component), or the like. The connections between the nodes in the maintenance-chain-of-thoughts based knowledge graph model can represent relationships between the different nodes. For example, a node representing an aircraft engine, a node representing elevated vibrations measured by a sensor, and a node representing a gearbox can be connected with each other by the connections (and used to help identify which LLM agents 104 are to be used when the inquiry 112 requests guidance on repair or inspection of an engine when abnormal vibrations are sensed by an accelerometer coupled to the gearbox between an aircraft engine and a backup generator).

The maintenance-chain-of-thoughts based knowledge graph model can be used by the orchestration LLM agent 102 to break down complex inquiries into smaller, intermediate thoughts or concepts 114. For example, the prior inquiry 112 can be broken down into the following intermediate thoughts 114: engine, vibrations, gearbox. Each of these intermediate thoughts can then be examined, along with the domain knowledge of each executive LLM agent 104 to identify which LLM agents 104 should be used to respond to the inquiry 112. For example, the LLM agent 104 trained with knowledge on abnormal vibrations, the LLM agent 104 trained on maintenance logbooks for the same engine, and the LLM agent 104 trained on service manuals of accelerometers can be selected based on the example inquiry 112. The orchestration LLM agent 102 can determine what sets or groups 108 of information is used to train each of the executive LLM agents 104, identify which sets or groups 108 are associated with the intermediate thoughts or concepts identified from the inquiry 112.

The orchestration LLM agent 102 can then assign one or more of the executive LLM agents 104 to examine the maintenance inquiry 112 based on which of the different sets 108 of the technical information that the executive LLM agents 104 were trained. For example, the orchestration LLM agent 102 may be trained to associate different sets 108 of the training information used to train the executive LLM agents 104 with different intermediate thoughts or concepts 114 identified from the inquiry 112. The orchestration LLM agent 102 can then identify which executive LLM agents 104 were trained on the sets 108 of information relevant to responding to the inquiry 112 based on which LLM agents 104 were trained on data relevant to the intermediate thoughts.

The executive LLM agents 104 selected by the orchestration LLM agent 102 can then examine the intermediate thoughts or concepts provided by the orchestration LLM agent 102 within the LLMs models of those LLM agents 104. The executive LLM agents 104 that are assigned to examine the maintenance inquiry 112 (or intermediate thoughts 114) can generate relevant responsive information 116 that is output to the interface 106 or orchestration LLM agent 102 for responding to the maintenance inquiry.

The executive LLM agents 104 can then provide output information 116 responsive to the inquiry 112. For example, the LLM agent 104 trained on maintenance logbooks can output a maintenance history of one or more components, the LLM agent 104 trained on parts catalogs can output images of the one or more components or replacement components, the LLM agent 104 trained on service manuals can output a list of instructions to perform replacement or repair of the components, etc. This output information 116 can be communicated to the orchestration LLM agent 102. The orchestration LLM agent 102 can then, as a generative LLM agent, create a response 118 to the maintenance inquiry 112. This response 118 may be sent to the interface 106 for viewing by the personnel. The personnel can view the information on the interface 106 while the personnel performs the inspection, repair, or maintenance of the equipment and/or equipment components.

The orchestration LLM agent 102 may modify or keep the output information 116 from the assigned LLM agents 104 to a defined format. For example, the response 118 presented on the interface 106 may consistently have a large font title at the top of an electronic display of the interface 106, an image of the component being repaired, replaced, or inspected below this title, a list of parts or other components that are needed to complete the repair, replacement, or inspection (along with availabilities of the parts or components) below the image, and a step-by-step list of instructions for performing the repair, replacement, or inspection (along with images associated with each step). The defined format may be used regardless of the maintenance inquiry 112 or the output information 116 that is received by the orchestration LLM agent 102. This can help personnel become more efficient over time as the personnel become more familiar with where various information is presented on the interface 106.

In one example, the LLM agent 104 trained on parts inventories can provide output information 116 that identifies one or more replacement parts or supplies needed to complete the inspection, repair, or maintenance, the availability of the replacement parts or supplies that are needed, and/or the location of the replacement parts or supplies. This can aid personnel in identifying needed parts or supplies, as well as potential alternate replacement parts or supplies that are available based on the inventory information. In some examples, the orchestration LLM agent 102 may automatically order supplies or replacement parts that are needed based on the output information 116.

The multi-agent LLM system 110 may be comprised in a system for maintenance of the powered system, for example in a maintenance facility. The system for maintenance of the powered system can further comprise one or more devices that are actionable based on the information presented through the interface 106 for the maintenance of the powered system. The actionable devices may belong to various devices where actions can be performed, and may be configured to perform any operation maintenance based upon commands received from an interface of the actionable devices. Thus, a maintenance personal can view the information presented on the interface 106, and trigger actions on the actionable devices accordingly to cause the actionable device to perform one or more maintenance operations corresponding to the information that is presented on the interface 106.

The generative orchestration LLM agent may receive little or no fine-tuning of the model. The discriminative LLM agents can be trained from highly fine-tuned discriminative ADLM. The ADLM is used to train individual agents (such as classifiers that classify data, searchers that search for data, or clusterers that group similar data), which can then provide discrete, finite, known responses from the data used to train the discriminative LLM agents. The individual agents trained by the ADLM can each perform a single task in isolation, thereby revealing none of its knowledge outside of its specific, categorized purpose. The orchestration LLM receives prompts and calls upon the execution LLM agents for responses. The orchestration LLM then assembles the responses from the execution LLM agents into a precise, safe, and secure answer that is an assemblage of the controlled contributions from the execution LLM agents.

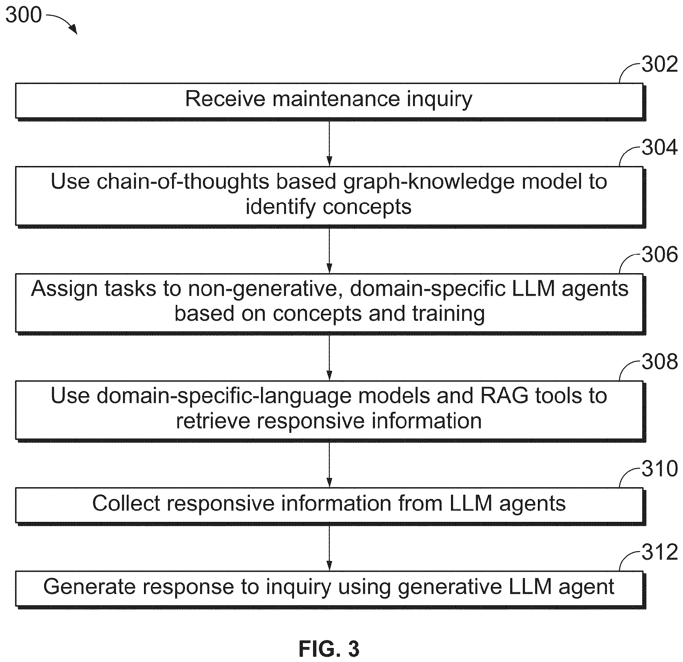

Figure 3 illustrates a flowchart of one example of a method 300 for using a multi-agent AI system for technical publication and maintenance history retrieval. The method 300 can represent operations performed by the LLM system 100 described herein. At 302, a maintenance inquiry is received. The inquiry may be received as a verbal question or statement that is spoken by one or more users, such as personnel in a maintenance shop. Alternatively, the inquiry may be typed, written, or the like. The inquiry can be received by the orchestration LLM agent 102.

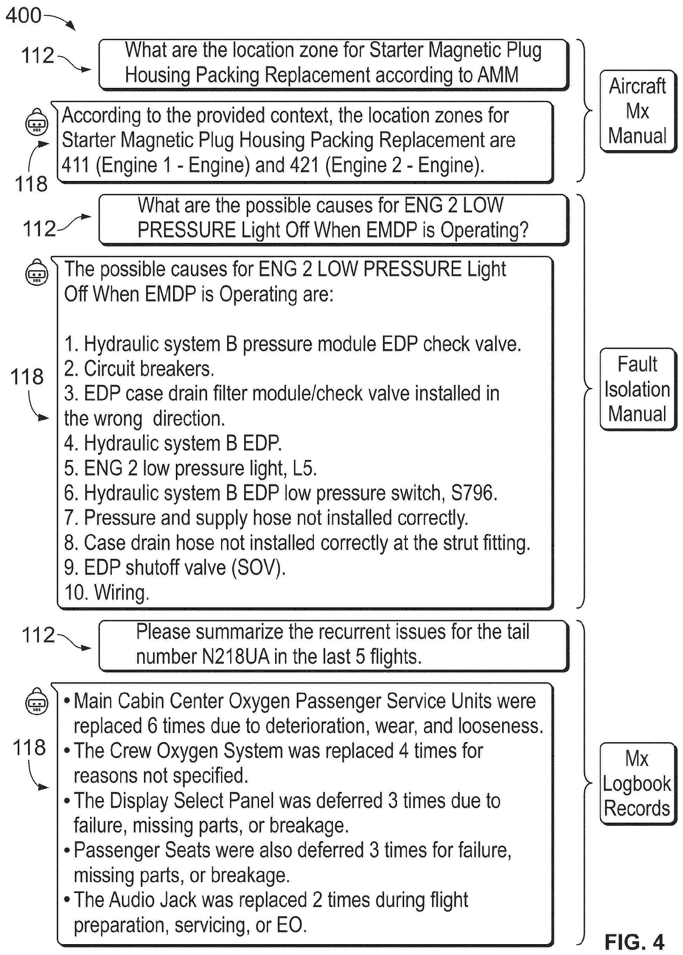

With continued reference to the flowchart of the method 300 shown in Figure 3, Figure 4 illustrates one example of operation of the LLM system 100 and method 300. Specifically, Figure 4 includes a GUI 400 that may be presented on the electronic display device of the interface 106 shown in Figure 1. The GUI 400 includes a display of the maintenance inquiry 112, which in this example is a request for the location of a part (i.e., a starter magnetic plug housing packing replacement) according to a specified manual (i.e., an aircraft maintenance manual, or AMM).

At 304 in the flowchart of the method 300 shown in Figure 3, a chain-of-thoughts-based knowledge graph model is used to identify intermediate thoughts or concepts within the inquiry. As described above, the orchestration LLM agent 102 can break down the inquiry into different concepts or classes 114, such as a first concept or class 114 that identifies one or more components (e.g., by name, make, model, and/or manufactured year), a second concept or class 114 that identifies condition of one or more components (e.g., failed, healthy, activated, deactivated, missing, damaged, etc.), and/or a third concept or class 114 that identifies an action to be performed (e.g., replace, repair, inspect, move, etc. one or more of the components). These concepts 114, or different combinations of the concepts 114, can be associated with different executive LLM agents 104 based on the training data used to train and/or re-train the different executive LLM agents 104. With respect to the example GUI 400 shown in Figure 4, the intermediate thoughts or concepts 114 identified by the orchestration LLM agent 102 based on the received inquiry 112 can include a service manual for the starter of the airplane engine (e.g., component classification).

At 306 in the flowchart shown in Figure 3, different non-generative, domain-specific LLM agents are assigned tasks based on the identified concepts and the training data. For example, the executive LLM agent 104 trained on service manuals can be sent a task of finding the relevant portions of the service manuals having information on the component class or concept (e.g., the service manual for the identified component), the condition class or concept (e.g., the portion of a service manual related to troubleshooting, repair, or replacement of the identified component), and/or the action class or concept (e.g., the portion of a service manual related to troubleshooting, repair, or replacement of the identified component). The executive LLM agent 104 trained on maintenance logs can be sent a task of finding the relevant maintenance history for the component identified by the component class. Other executive LLM agents 104 may be sent other tasks related to the inquiry.

With respect to the example shown in Figure 4, the orchestration LLM agent 102 can identify the executive LLM agent 104 trained on service manuals and other technical publications related to starters for airplane engines. The orchestration LLM agent 102 can then assign a task to this executive LLM agent 104 that requests the agent 104 find the location zones for the packing replacement.

At 308 in the flowchart shown in Figure 3, domain-specific language models can be used to retrieve information that is responsive to the assigned task. Each of the executive LLM agents 104 assigned at 306 can use the language model of that LLM agent 104 that was trained to a specific domain (e.g., a specific part, component, or equipment; or type of information such as service manuals, inventories, maintenance logs, or the like). The executive LLM agents 104 can obtain information responsive to the tasks assigned to the agents 104 and can provide this as the output information 116 that is sent to the orchestration LLM agent 102.

At 310, the information that is responsive to the assigned tasks are collected from the executive LLM agents 104. Each of the task-assigned executive LLM agents 104 may communicate the information responsive to the assigned task to the orchestration LLM agent 102. At 312, a response to the received inquiry is provided using a generative LLM agent. For example, after collecting the output information 116 from the executive LLM agents 104, the orchestration LLM agent 102 can generate a response to the inquiry 112 using the output information 116. The orchestration LLM agent 102 may generate the response 118 as a generative LLM agent, but may keep or maintain use of a defined or designated format for the response 118. In the example shown in Figure 4, the orchestration LLM agent 102 can provide text on the display of the interface 106 providing the locations of the packing replacements.

In a conversational manner, the flow of the method 300 can be repeated one or more times. For example, following providing the response 118 to the inquiry 112 via the interface 106, the method 300 may repeat one or more times. In the example shown in Figure 4, following presentation of the response 118 indicating the requested locations, the personnel provide an additional inquiry 112 as to potential causes of a condition of an engine component. This additional inquiry 112 asks the possible causes for a low engine pressure light being off while an electric motor driven pump is operating. As described above, the orchestration LLM agent 102 breaks this request down into intermediate thoughts or concepts 114 (such as electric motor driven pumps, deactivated light, low pressure alerts, faults, etc.), and assigns tasks to certain executive LLM agents 104 to find information responsive to the request, such as the executive LLM agent(s) 104 trained on fault isolation manuals. The orchestration LLM agent 102 receives output information 116 from the executive LLM agents 104 and presents another response 118 via the interface 106. This additional response 118 can list several potential causes for the low pressure light being off, such as a circuit breaker being tripped, faulty wiring, an incorrectly installed hose, or the like.

In response to receiving this additional response 118, the orchestration LLM agent 102 may receive another inquiry 112 asking for which issues are repeatedly occurring for a particular aircraft (i.e., tail number N218UA). The orchestration LLM agent 102 can break down this inquiry 112 into the concepts of maintenance logs and the specific powered system of the aircraft having that identified tail number. The orchestration LLM agent 102 can assign tasks to the executive LLM agents 104 trained on maintenance logbooks and information regarding the identified aircraft. Upon receiving the output information 116 from the LLM agents 104 to which the tasks were assigned, the orchestration LLM agent 104 can provide the response 118 to the personnel via the interface 106. In this example, the response 118 lists a history of maintenance issues and repairs from the logbooks of the aircraft, including how many time the oxygen passenger service units were replaced, why the display select panel was deferred three times, and so on. The method 300 and operation of the LLM system 100 can continue in this conversational manner, with personnel asking for information, the LLM system 100 breaking the requests into concepts, assigning tasks to LLM agents 104 trained in specific domains relevant to the concepts, and present the information found by the LLM agents 104.

As described above, the LLM agents 102, 104 can continue to be re-trained to improve over time. The weights applied by neurons 206 in the agents 102, 104, the synaptic circuits 214, 214' that connect the neurons 206 within the agents, and so on, can be changed. For example, if an inquiry 112 requests an identification of potential causes for a faulty component and the response 118 is incorrect, then feedback can be provided to the LLM agent(s) 114 that provided the incorrect part of the response 118. The weights and/or circuits 214, 214' can then be changed to try and reduce or eliminate this error going forward.

The method 300 may belong to method for maintenance of a powered system that comprises the steps of the method 300, then a step of actioning one or more devices of a system for maintenance of the powered system, based on the information presented through the interface 106. The method for maintenance of the powered system may typically be executed by a system for maintenance of the powered system as described above. Thus, the information presented through the interface 106 can be converted into maintenance actions.

Further, the disclosure comprises examples according to the following clauses:
Clause 1: A multi-agent large language model (LLM) system comprising: multiple non-generative executive LLM agents each trained on a different set of technical information limited to maintenance information of a powered system; and a generative orchestration LLM agent coupled with the executive LLM agents, the orchestration LLM agent configured to receive a maintenance inquiry related to the powered system from personnel, assign one or more of the executive LLM agents to examine the maintenance inquiry based on which of the different sets of the technical information that the executive LLM agents were trained, the one or more of the executive LLM agents configured to examine the set of the technical information used to train the respective one or more of the executive LLM agents for relevant information to be output responsive to the maintenance inquiry and to provide the relevant information to the orchestration LLM agent, the orchestration LLM configured to present the relevant information from the one or more of the executive LLM agents to the personnel for maintenance of the powered system.
Clause 2: The multi-agent LLM system of Clause 1, wherein each of the executive LLM agents and the orchestration LLM agent comprises an application specific integrated circuit (ASIC) for an artificial neural network (ANN) of the respective generative or non-executive LLM agent, each of the ASICs of the respective generative or non-executive LLM agent comprising neurons organized in an array with each of the neurons having a register, a microprocessor, and at least an input, each of the ASICs also including synaptic circuits each having a memory for storing a synaptic weight, the neurons connected with each other via the synaptic circuits.
Clause 3: The multi-agent LLM system of Clause 1, wherein the non-executive LLM agent is configured to select the one or more of the executive LLM agents for assignment to examine the maintenance inquiry using a knowledge graph model and based on which of the different sets of the technical information that the executive LLM agents were trained.
Clause 4: The multi-agent LLM system of Clause 1, wherein the one or more of the executive LLM agents that are assigned to examine the maintenance inquiry are configured to use a powered-system-specific-language model to examine one or more of the sets of the technical information used to train the one or more of the executive LLM agents to reduce hallucinatory responses to the maintenance inquiry relative to the one or more of the executive LLM agents examining the one or more of the sets of the technical information using a model other than the powered-system-specific-language model.
Clause 5: The multi-agent LLM system of Clause 4, wherein the powered-system-specific-language model includes only the technical information about the powered system.
Clause 6: The multi-agent LLM system of Clause 1, wherein the one or more of the executive LLM agents that are assigned to examine the maintenance inquiry are configured to generate the relevant information that is output to the orchestration LLM agent for responding to the maintenance inquiry.
Clause 7: The multi-agent LLM system of Clause 1, wherein the executive LLM agents are configured to classify the maintenance inquiry based on one or more of a component classifier, a condition classifier, or an action classifier for outputting the relevant information to the non-executive LLM agent.
Clause 8: The multi-agent LLM system of Clause 1, wherein at least one of the executive LLM agents is trained on maintenance logbook data for one or more of the powered system or another powered system.
Clause 9: The multi-agent LLM system of Clause 1, wherein the executive LLM agents are trained on the technical information limited to aircraft as the powered system.
Clause 10: The multi-agent LLM system of Clause 1, wherein the executive LLM agents are modular and the orchestration LLM agent is configured to one or more of add one or more additional executive LLM agents to the multi-agent LLM system or replace at least one of the executive LLM agents with another executive LLM agent.
Clause 11: The multi-agent LLM system of Clause 1, wherein the orchestration LLM is configured to present the relevant information in a consistent format for many different inquiries.
Clause 12: A method of using a multi-agent large language model (LLM) system to obtain and present relevant information for maintenance of a powered system, the method comprising: training each of multiple executive LLM agents on a different set of technical information limited to maintenance information of the powered system to create trained non-generative executive LLM agents; receiving a maintenance inquiry related to the powered system from personnel using a generative orchestration LLM; assigning one or more of the executive LLM agents to examine the maintenance inquiry based on which of the different sets of the technical information that the executive LLM agents were trained, the one or more of the executive LLM agents configured to examine the set of the technical information used to train the respective one or more of the executive LLM agents for relevant information to be output responsive to the maintenance inquiry; providing the relevant information from the one or more of the executive LLM agents to the orchestration LLM agent; and presenting, using the orchestration LLM, the relevant information from the one or more of the executive LLM agents to the personnel for maintenance of the powered system.
Clause 13: A multi-agent large language model (LLM) system comprising: multiple non-generative executive LLM agents each trained on a different set of maintenance information limited to maintenance of an aircraft; and a generative orchestration LLM agent coupled with the executive LLM agents, the orchestration LLM agent configured to receive a maintenance inquiry related to the aircraft, assign one or more of the executive LLM agents to examine the maintenance inquiry based on which of the different sets of the technical information that the executive LLM agents were trained, the one or more of the executive LLM agents configured to utilize ADLMs to identify relevant information to be output responsive to the maintenance inquiry, the one or more of the executive LLM agents configured to provide the relevant information to the orchestration LLM agent, the orchestration LLM configured to present the relevant information from the one or more of the executive LLM agents for maintenance of the aircraft.
Clause 14: The multi-agent LLM system of Clause 13, wherein each of the executive LLM agents and the orchestration LLM agent comprises an application specific integrated circuit (ASIC) for an artificial neural network (ANN) of the respective generative or non-executive LLM agent, each of the ASICs of the respective generative or non-executive LLM agent comprising neurons organized in an array with each of the neurons having a register, a microprocessor, and at least an input, each of the ASICs also including synaptic circuits each having a memory for storing a synaptic weight, the neurons connected with each other via the synaptic circuits.
Clause 15: The multi-agent LLM system of Clause 13, wherein the non-executive LLM agent is configured to select the one or more of the executive LLM agents for assignment to examine the maintenance inquiry using a knowledge graph model and based on which of the different sets of the technical information that the executive LLM agents were trained.
Clause 16: The multi-agent LLM system of Clause 13, wherein the one or more of the executive LLM agents that are assigned to examine the maintenance inquiry are configured to use the ADLMs to reduce hallucinatory responses to the maintenance inquiry relative to the one or more of the executive LLM agents examining the one or more of the sets of the technical information using a model other than the ADLM.
Clause 17: The multi-agent LLM system of Clause 13, wherein the executive LLM agents are configured to classify the maintenance inquiry based on one or more of a component classifier, a condition classifier, or an action classifier for outputting the relevant information to the non-executive LLM agent.
Clause 18: The multi-agent LLM system of Clause 17, wherein the one or more of the executive LLM agents are configured to output the relevant information based on the one or more of the component classifier that identifies an aircraft component that is a subject of or related to the maintenance inquiry, the condition classifier that identifies a condition of the aircraft component, or the action classifier that identifies a responsive action to take with respect to the aircraft component.
Clause 19: The multi-agent LLM system of Clause 13, wherein at least one of the executive LLM agents is trained on maintenance logbook data for one or more of the aircraft or another aircraft.
Clause 20: The multi-agent LLM system of Clause 13, wherein the executive LLM agents are modular and the orchestration LLM agent is configured to one or more of add one or more additional executive LLM agents to the multi-agent LLM system or replace at least one of the executive LLM agents with another executive LLM agent.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A multi-agent large language model (LLM) system comprising:
multiple non-generative executive LLM agents (104) each trained on a different set of technical information limited to maintenance information of a powered system; and
a generative orchestration LLM agent (102) coupled with the executive LLM agents (104),
the orchestration LLM agent (102) configured to receive a maintenance inquiry (112) related to the powered system from personnel, assign one or more of the executive LLM agents (104) to examine the maintenance inquiry (112) based on which of the different sets of the technical information that the executive LLM agents (104) were trained, the one or more of the executive LLM agents (104) configured to examine the set of the technical information used to train the respective one or more of the executive LLM agents (104) for relevant information to be output responsive to the maintenance inquiry (112) and to provide the relevant information to the orchestration LLM agent (102, 104), the orchestration LLM configured to present, through an interface (106), the relevant information from the one or more of the executive LLM agents (104) .

2. The multi-agent LLM system (110) of claim 1, wherein each of the executive LLM agents (104) and the orchestration LLM agent (102) comprises an application specific integrated circuit (ASIC) for an artificial neural network (ANN) of the respective generative or non-executive LLM agent (102, 104), each of the ASICs of the respective generative or non-executive LLM agent (102, 104) comprising neurons (206) organized in an array with each of the neurons (206) having a register, a microprocessor, and at least an input, each of the ASICs also including synaptic circuits (214) each having a memory for storing a synaptic weight, the neurons (206) connected with each other via the synaptic circuits (214).

3. The multi-agent LLM system (110) of claim 1, wherein the non-executive LLM agent (102, 104) is configured to select the one or more of the executive LLM agents (104) for assignment to examine the maintenance inquiry (112) using a knowledge graph model and based on which of the different sets of the technical information that the executive LLM agents (104) were trained.

4. The multi-agent LLM system (110) of claim 1, wherein the one or more of the executive LLM agents (104) that are assigned to examine the maintenance inquiry (112) are configured to use a powered-system-specific-language model to examine one or more of the sets of the technical information used to train the one or more of the executive LLM agents (104) to reduce hallucinatory responses (118) to the maintenance inquiry (112) relative to the one or more of the executive LLM agents (104) examining the one or more of the sets of the technical information using a model other than the powered-system-specific-language model.

5. The multi-agent LLM system (110) of claim 4, wherein the powered-system-specific-language model includes only the technical information about the powered system.

6. The multi-agent LLM system (110) of claim 1, wherein the one or more of the executive LLM agents (104) that are assigned to examine the maintenance inquiry (112) are configured to generate the relevant information that is output to the orchestration LLM agent (102) for responding to the maintenance inquiry (112).

7. The multi-agent LLM system (110) of claim 1, wherein the executive LLM agents (104) are configured to classify the maintenance inquiry (112) based on one or more of a component classifier, a condition classifier, or an action classifier for outputting the relevant information to the non-executive LLM agent (102, 104).

8. The multi-agent LLM system (110) of claim 1, wherein at least one of the executive LLM agents (104) is trained on maintenance logbook data for one or more of the powered system or another powered system.

9. The multi-agent LLM system (110) of claim 1, wherein the executive LLM agents (104) are trained on the technical information limited to aircraft as the powered system.

10. The multi-agent LLM system (110) of claim 1, wherein the executive LLM agents (104) are modular and the orchestration LLM agent (102) is configured to one or more of add one or more additional executive LLM agents (104) to the multi-agent LLM system (110)or replace at least one of the executive LLM agents (104) with another executive LLM agent (102, 104).

11. The multi-agent large language model (LLM) system of any of the preceding claim, wherein:
the powered system is an aircraft ;
the one or more of the executive LLM agents (104) are configured, in order to examine the set of the technical information used to train the respective one or more of the executive LLM agents to identify relevant information to be output responsive to the maintenance inquiry (112), to utilize aviation-domain-specific-language models (ADLMs).

12. The multi-agent LLM system (110) of claim 11, dependent upon claim 7, wherein the one or more of the executive LLM agents (104) are configured to output the relevant information based on the one or more of the component classifier that identifies an aircraft component that is a subject of or related to the maintenance inquiry (112), the condition classifier that identifies a condition of the aircraft component, or the action classifier that identifies a responsive action to take with respect to the aircraft component.

13. A system for maintenance of a powered system comprising:
- the multi-agent LLM system (110) of any of the preceding claims ;
- one or more devices that are actionable based on the information presented through the interface (106) for the maintenance of the powered system.

14. A method of using a multi-agent large language model (LLM) system, said multi-agent LLM system comprising multiple non-generative executive LLM agents (104) each trained on a different set of technical information limited to maintenance information of a powered system, to obtain and present relevant information for maintenance of a powered system, the method comprising:
receiving a maintenance inquiry (112) related to the powered system from personnel using a generative orchestration LLM;
assigning one or more of the executive LLM agents (104) to examine the maintenance inquiry (112) based on which of the different sets of the technical information that the executive LLM agents (104) were trained, the one or more of the executive LLM agents (104) configured to examine the set of the technical information used to train the respective one or more of the executive LLM agents (104) for relevant information to be output responsive to the maintenance inquiry (112);
providing the relevant information from the one or more of the executive LLM agents (104) to the orchestration LLM agent (102, 104); and
presenting, through an interface (106), using the orchestration LLM, the relevant information from the one or more of the executive LLM agents (104).

15. A method for maintenance of a powered system comprising:
- the steps of the method of claim 14;
- actioning one or more devices of a system for maintenance of the powered system based on the information presented through the interface (106) for the maintenance of the powered system.
